# EUROPEAN PATENT APPLICATION

(11) **EP 4 844 881 A1**
(43) Date of publication of application: **25.11.2026**
(21) Application number: 26175535.9
(22) Date of filing: 29.04.2026
(51) Int. Cl.: H01M 10/0585, H01M 50/54, H01M 50/105, H01M 50/533, H01M 50/548

(54) **BATTERY CELL**

(30) Priority: 19.05.2025 JP 2025083372
(71) Applicant: Toyota Jidosha Kabushiki Kaisha, Toyota-shi, Aichi-ken 471-8571 (JP)
(72) Inventor: IZUMI, Jun, Toyota-shi, Aichi-ken,, 471-8571 (JP); SUGIHARA, Atsushi, Toyota-shi, Aichi-ken,, 471-8571 (JP); NAKASHIMA, Satoshi, Toyota-shi, Aichi-ken,, 471-8571 (JP); ONO, Masato, Toyota-shi, Aichi-ken,, 471-8571 (JP); HAGA, Masayoshi, Toyota-shi, Aichi-ken,, 471-8571 (JP); ISHIZUKA, Masahiro, Toyota-shi, Aichi-ken,, 471-8571 (JP); MIYAHARA, Kenta, Toyota-shi, Aichi-ken,, 471-8571 (JP)
(74) Representative: Winter, Brandl - Partnerschaft mbB

(57) **Abstract**

A battery cell (10) includes: an electrode stack (12) in which a plurality of sheet materials including a plurality of first electrode sheets is stacked along a first horizontal direction; a cell case (14) configured to house the electrode stack (12) and constituted of a film material (50); and an electrolytic solution (19) enclosed within the cell case (14) wherein the first electrode sheets each include a first joining tab (26) and are joined to each other at the first joining tab (26), the first joining tab (26) protruding toward one side (Y1) in a second horizontal direction perpendicular to the first horizontal direction, and a center (C26) of the first joining tab (26) is located on an upper side (Z1) with respect to a center (C20) of the first electrode sheets in an up-down direction orthogonal to the first horizontal direction and the second horizontal direction.

## Description

### BACKGROUND OF THE INVENTION

### 1. Field of the Invention

The technology disclosed in the present specification relates to a battery cell.

### 2. Description of Related Art

Japanese Unexamined Patent Application Publication No. 2020-68197 describes a pouch-type battery cell. The pouch-type battery cell includes an electrode stack including a plurality of electrode sheets, a pouch-type cell case that houses the electrode stack, and an electrolytic solution enclosed within the cell case. The electrode sheets include a plurality of positive electrode sheets and a plurality of negative electrode sheets. The positive electrode sheets include tab-shaped protrusions (hereinafter referred to as joining tabs) and are joined to each other at the joining tabs. The negative electrode sheets also include joining tabs and are joined to each other at the joining tabs. The portion where the joining tabs are joined to each other is also referred to as a foil collecting portion.

### SUMMARY OF THE INVENTION

The electrode stack inside the cell case swells and shrinks in response to charging and discharging of the battery cell. When the electrode stack swells, the electrolytic solution that has permeated the electrode stack is forced out of the electrode stack. Thereafter, when the electrode stack shrinks, the electrolytic solution that was forced out of the electrode stack re-permeates the electrode stack. By repeating this cycle, an appropriate amount of the electrolytic solution is retained in the electrode stack.

However, a portion of the electrolytic solution forced out of the electrode stack is absorbed by the foil collecting portion of the electrode stack. The foil collecting portion has a structure in which the joining tabs are stacked at high density. Therefore, the electrolytic solution absorbed by the foil collecting portion is likely to remain within the foil collecting portion even when the electrode stack shrinks. In this case, the amount of the electrolytic solution that re-permeates the electrode stack decreases, which may result in a reduction in the performance of the battery cell.

In view of the above, the present disclosure provides a battery cell that suppresses an electrolytic solution forced out of an electrode stack remaining within a foil collecting portion.

A first aspect of the present disclosure provides a battery cell including: an electrode stack in which a plurality of sheet materials including a plurality of first electrode sheets and a plurality of second electrode sheets is stacked along a first horizontal direction; a cell case of a pouch shape configured to house the electrode stack and constituted of a film material; and an electrolytic solution enclosed within the cell case, in which: the first electrode sheets each include a first joining tab and are joined to each other at the first joining tab, the first joining tab protruding toward one side in a second horizontal direction perpendicular to the first horizontal direction; the second electrode sheets each include a second joining tab and are joined to each other at the second joining tab, the second joining tab protruding toward the other side in the second horizontal direction; and a center of the first joining tab is located on an upper side with respect to a center of the first electrode sheets in an up-down direction orthogonal to the first horizontal direction and the second horizontal direction.

In the above configuration, the first joining tab of the first electrode sheet is offset upward with respect to the center of the first electrode sheet. With such a configuration, the foil collecting portion at which the first joining tabs are joined to each other is also formed on the relatively upper side. On the other hand, the electrolytic solution forced out of the electrode stack tends to collect in the lower part of the cell case due to the action of gravity. Thus, when the foil collecting portion is located on the relatively upper side, the electrolytic solution forced out of the electrode stack is less likely to be absorbed by the foil collecting portion, and the electrolytic solution is more likely to be discharged from the foil collecting portion. This suppresses the electrolytic solution forced out of the electrode stack remaining in the foil collecting portion, and the performance of the battery cell is maintained for a long period of time, for example.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a front view of a battery cell 10 according to a first embodiment;
FIG. 2 is a front view of the battery cell 10 according to the first embodiment, illustrating the internal structure of the battery cell 10 with a part of a cell case 14 omitted;
FIG. 3 is a cross-sectional view taken along line III-III in FIG. 2;
FIG. 4 illustrates a stack of positive electrode sheets 20, separators 40, and negative electrode sheets 30;
FIG. 5 is a cross-sectional view taken along line V-V in FIG. 2, illustrating the cross-sectional structure of a first foil collecting portion 28;
FIG. 6 is a cross-sectional view taken along line VI-VI in FIG. 2, illustrating the cross-sectional structure of a second foil collecting portion 38;
FIG. 7 is a cross-sectional view taken along line VII-VII in FIG. 2, illustrating the configuration of an electrode stack 12 on the lower side of the first foil collecting portion 28; and
FIG. 8 is a front view of a battery cell 110 according to a second embodiment, illustrating the internal structure of the battery cell 110 with a part of a cell case 114 omitted.

### DETAILED DESCRIPTION OF EMBODIMENTS

A first aspect of the present disclosure provides a battery cell including: an electrode stack in which a plurality of sheet materials including a plurality of first electrode sheets and a plurality of second electrode sheets is stacked along a first horizontal direction; a cell case of a pouch shape configured to house the electrode stack and constituted of a film material; and an electrolytic solution enclosed within the cell case, in which: the first electrode sheets each include a first joining tab and are joined to each other at the first joining tab, the first joining tab protruding toward one side in a second horizontal direction perpendicular to the first horizontal direction; the second electrode sheets each include a second joining tab and are joined to each other at the second joining tab, the second joining tab protruding toward the other side in the second horizontal direction; and a center of the first joining tab is located on an upper side with respect to a center of the first electrode sheets in an up-down direction orthogonal to the first horizontal direction and the second horizontal direction.

The battery cell according to the above aspect, in which a lowest part of the first joining tab is located on the upper side with respect to the center of the first electrode sheets. With such a configuration, it is possible to effectively suppress the electrolytic solution forced out of the electrode stack remaining in the foil collecting portion.

The battery cell according to the above aspect, in which: an upper end edge and a lower end edge of the first joining tab are asymmetrical in the up-down direction; and the lower end edge is displaced toward a lower side from a tip end of the first joining tab toward a base end of the first joining tab. With such a configuration, the electrolytic solution absorbed by the foil collecting portion of the first joining tab is guided toward the electrode stack by the action of gravity. This promotes re-permeation of the electrolytic solution into the electrode stack.

The battery cell according to the above aspect, in which on a lower side of the first joining tab, a distance between the electrode stack and an inner surface of the cell case that face each other in the second horizontal direction decreases toward the lower side. With such a configuration, when the electrolytic solution forced out of the electrode stack collects in the lower part of the cell case, the electrolytic solution is guided toward the electrode stack. This promotes re-permeation of the electrolytic solution into the electrode stack.

The battery cell according to the above aspect, in which: the cell case includes a welded portion at which the film material is welded at a position facing the electrode stack in the second horizontal direction; and on a lower side of the first joining tab, a distance between the electrode stack and the welded portion of the cell case decreases toward the lower side. Also with such a configuration, when the electrolytic solution forced out of the electrode stack collects in the lower part of the cell case, the electrolytic solution is guided toward the electrode stack. This promotes re-permeation of the electrolytic solution into the electrode stack.

The battery cell according to the above aspect, in which a recess is provided in an inner surface of the cell case in a range located on a lower side with respect to the first joining tab. With such a configuration, the electrolytic solution forced out of the electrode stack is accommodated in the recess, suppressing the electrolytic solution being absorbed by the foil collecting portion of the first joining tab. Consequently, it is possible to effectively suppress the electrolytic solution forced out of the electrode stack remaining in the foil collecting portion.

The battery cell according to the above aspect, in which: the cell case includes a welded portion at which the film material is welded; and the recess is provided in the welded portion. With such a configuration, a recess can be easily formed in the cell case.

The battery cell according to the above aspect, in which: the sheet materials further include a separator; and the separator protrudes further toward the one side in the second horizontal direction than the first electrode sheets and the second electrode sheets on a lower side of the first joining tab. With such a configuration, the electrolytic solution forced out of the electrode stack is guided by the separators, promoting re-permeation into the electrode stack.

The battery cell according to the above aspect, in which: the first electrode sheets are each one of a positive electrode sheet and a negative electrode sheet; and the second electrode sheets are each the other of the positive electrode sheet and the negative electrode sheet.

The battery cell according to the above aspect, in which a center of the second joining tab is located on an upper side with respect to a center of the second electrode sheets in the up-down direction. Consequently, it is also possible to suppress the electrolytic solution forced out of the electrode stack remaining in the foil collecting portion of the second joining tab.

In another aspect of the present technology, one or more of the features described above regarding the first joining tab may be similarly employed regarding the second joint tab in any of the aspects described above.

### First Embodiment

A battery cell 10 according to a first embodiment will be described with reference to the drawings. The battery cell 10 according to the present embodiment can be used in a battery pack of an electrified vehicle such as a battery electric vehicle (BEV), for example, although this is not particularly limiting. The battery cell 10 according to the present embodiment is a lithium ion battery cell, for example, and is configured to be repeatedly rechargeable. However, the specific type of the battery cell 10 is not particularly limited.

Here, a direction X1 in the drawings indicates one side in a first horizontal direction, and a direction X2 indicates the other side in the first horizontal direction. A direction Y1 indicates one side in a second horizontal direction, and a direction Y2 indicates the other side in the second horizontal direction. A direction Z1 indicates the upper side in the up-down direction, and a direction Z2 indicates the lower side in the up-down direction. The first horizontal direction and the second horizontal direction are orthogonal to each other and are also orthogonal to the vertical direction. The up-down direction is a direction parallel to the vertical direction. The battery cell 10 according to the present embodiment is typically assumed to be used in the posture illustrated in the drawings.

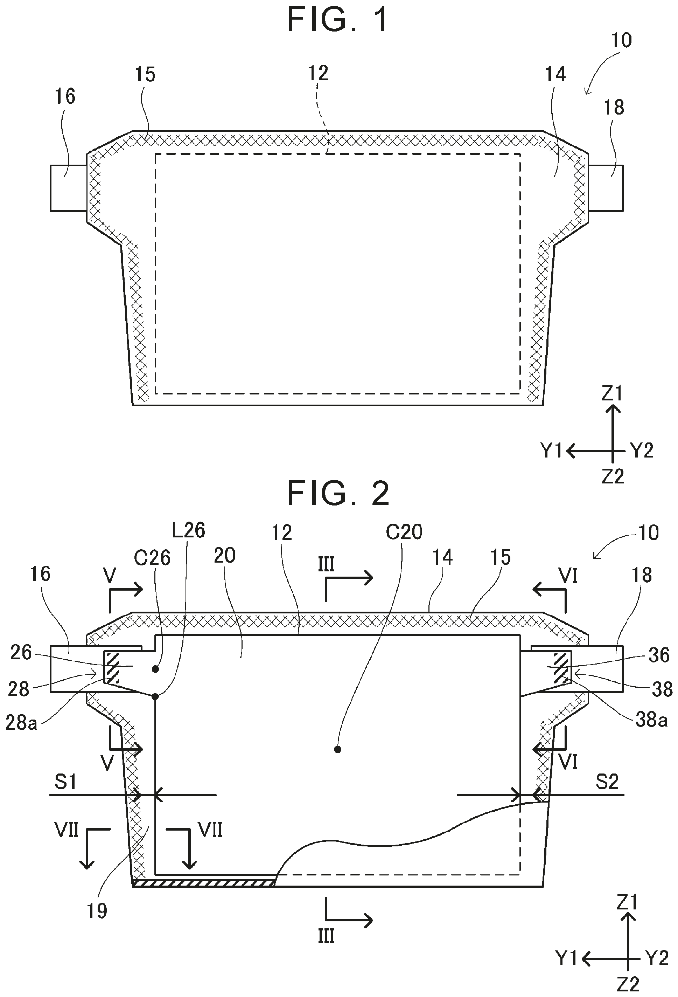

As illustrated in FIGS. 1 to 3, the battery cell 10 includes an electrode stack 12, a cell case 14, a positive electrode terminal 16, a negative electrode terminal 18, and an electrolytic solution 19. The electrode stack 12 is a battery element configured to be chargeable and dischargeable. The electrode stack 12 is housed inside the cell case 14. The electrolytic solution 19 is enclosed inside the cell case 14. The electrolytic solution 19 permeates the electrode stack 12. The positive electrode terminal 16 extends between the inside and the outside of the cell case 14 and is electrically connected to the electrode stack 12 inside the cell case 14. The negative electrode terminal 18 also extends between the inside and the outside of the cell case 14 and is electrically connected to the electrode stack 12 inside the cell case 14. The positive electrode terminal 16 and the negative electrode terminal 18 are constituted from a sheet material of metal such as copper or aluminum, for example.

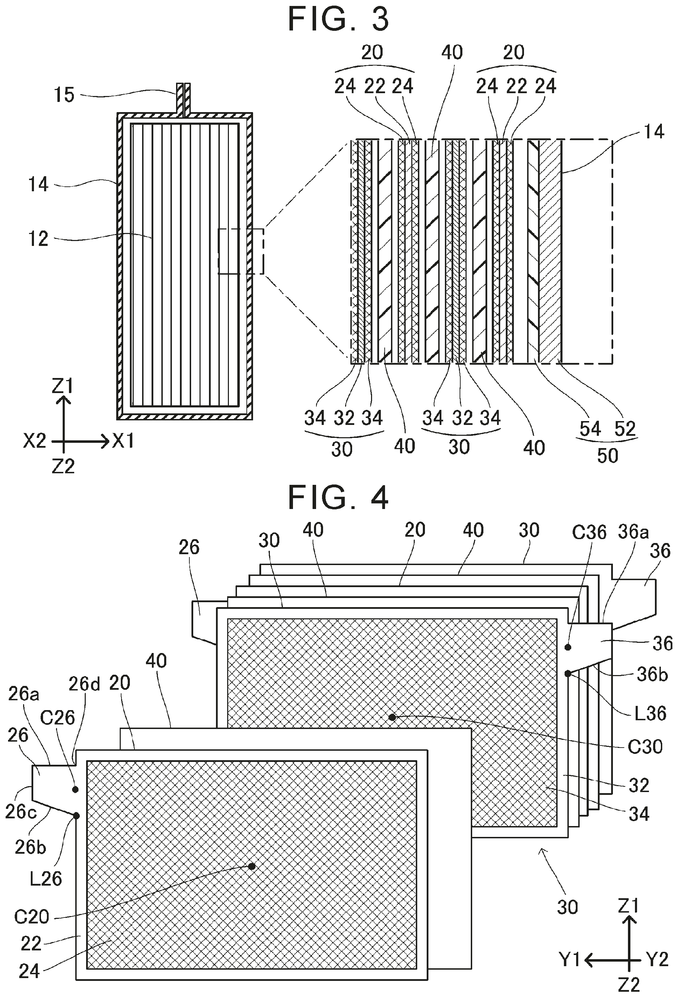

The cell case 14 is made of a film material 50 (see FIG. 3). The film material 50 is a laminate film, for example, and has a structure in which a resin film 54 is provided on the surface of an aluminum film 52. The cell case 14 has a structure in which a film material 50 is folded in half, although this is not particularly limiting. A welded portion 15 is formed at the periphery of overlapping portions of the film material 50. That is, the welded portion 15 is formed on three sides of the cell case 14. At the welded portion 15, the resin films 54 of the film materials 50 are welded to each other, and the electrode stack 12 and the electrolytic solution 19 are enclosed liquid-tightly. The cell case 14 may be made of two film materials. In this case, the welded portion 15 is formed on the four sides of the cell case 14.

As illustrated in FIGS. 2 to 4, the electrode stack 12 includes a plurality of sheet materials 20, 30, 40 stacked along the first horizontal direction. The sheet materials 20, 30, 40 include a plurality of positive electrode sheets 20, a plurality of negative electrode sheets 30, and a plurality of separators 40. In the electrode stack 12, the positive electrode sheets 20 and the negative electrode sheets 30 are alternately stacked with the separators 40 interposed therebetween. Each pair of a positive electrode sheet 20 and a negative electrode sheet 30 facing each other via a separator 40, together with an electrolytic solution 19 permeating therebetween, constitutes a unit structure of the battery. The number of the positive electrode sheets 20 and the number of the negative electrode sheets 30 are not particularly limited. In addition, some or all of the separators 40 may be replaced with a long separator extending in a zigzag pattern.

The separators 40 are configured to allow charge carriers (here, lithium ions) to pass therethrough. The separators 40 are made of an insulating material, for example. Examples of the separators 40 include a porous polymer film and a porous nonwoven fabric. The porous polymer film is constituted by a film containing a polyolefin polymer such as an ethylene polymer, a propylene polymer, an ethylene/butene copolymer, an ethylene/hexene copolymer, or an ethylene/methacrylate copolymer, for example. The porous polymer film may be composed of a single layer film or two or more layers of film. The porous nonwoven fabric is made of high-melting-point glass fiber, polyethylene terephthalate fiber, or the like, for example. The surface of the porous polymer film or the porous nonwoven fabric may be coated with a material containing ceramic.

The positive electrode sheet 20 has a positive electrode current collector foil 22 and a positive electrode mixture layer 24 provided on the positive electrode current collector foil 22. The positive electrode current collector foil 22 is a metal foil such as an aluminum foil, for example. The positive electrode current collector foil 22 has a generally rectangular shape when viewed along the first horizontal direction (X1, X2). The positive electrode mixture layer 24 contains a positive electrode active material. Examples of the positive electrode active material include lithium nickel composite oxide, lithium cobalt composite oxide, and lithium manganese composite oxide. The positive electrode active material may be composed of a single type of material or a plurality of types of materials. The positive electrode mixture layer 24 may further include other materials such as a binder and a conductive additive. In the positive electrode sheet 20 according to the present embodiment, the positive electrode mixture layer 24 is provided on both sides of the positive electrode current collector foil 22. However, in other embodiments, the positive electrode mixture layer 24 may be provided on only one surface of the positive electrode current collector foil 22.

Each of the positive electrode sheets 20 further includes a first joining tab 26. The first joining tab 26 of the positive electrode sheet 20 protrudes toward one side (Y1) in the second horizontal direction. In the positive electrode sheet 20 according to the present embodiment, the first joining tab 26 is formed integrally with the positive electrode current collector foil 22, although this is not particularly limiting. In the positive electrode sheet 20, the first joining tab 26 is offset toward the upper side (Z1). In other words, a center C26 of the first joining tab 26 is located on the upper side with respect to a center C20 of the positive electrode sheet 20 in the up-down direction (Z1, Z2). In particular, in the positive electrode sheet 20 according to the present embodiment, a lowest part L26 of the first joining tab 26 is located on the upper side with respect to the center C20 of the positive electrode sheet 20. That is, the first joining tab 26 is significantly offset upward such that the entire first joining tab 26 is located on the upper side with respect to the center C20 of the positive electrode sheet 20.

Here, the dimensions of the first joining tab 26 according to the present embodiment in the up-down direction are different between a tip end 26c and a base end 26d. Accordingly, the center of the first joining tab 26 in the up-down direction is also different between the tip end 26c and the base end 26d. Therefore, in the present specification, the center C26 of the first joining tab 26 in the up-down direction is defined at the base end 26d of the first joining tab 26. The same applies to a second joining tab 36 described later, and a center C36 of the second joining tab 36 in the up-down direction is measured at the base end of the second joining tab 36.

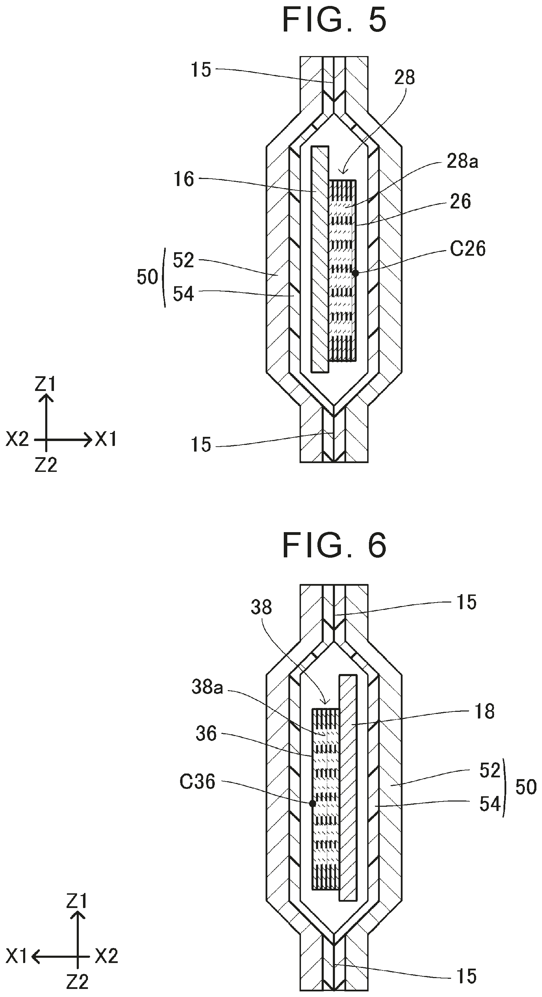

As illustrated in FIG. 5, the first joining tabs 26 of the positive electrode sheets 20 are joined to each other to form a first foil collecting portion 28. That is, the positive electrode sheets 20 are physically and electrically connected at the first foil collecting portion 28. In the first foil collecting portion 28, the first joining tabs 26 are welded to each other by ultrasonic welding, for example, and welding marks 28a are formed, although this is not particularly limiting. The positive electrode terminal 16 is further joined to the foil collecting portion 28. Consequently, the positive electrode sheets 20 are connected in parallel to the positive electrode terminal 16. Here, in the up-down direction (Z1, Z2), the center of the first foil collecting portion 28 substantially coincides with the center C26 of the first joining tab 26, and the center of the electrode stack 12 substantially coincides with the center C20 of the positive electrode sheet 20. Therefore, the center of the first foil collecting portion 28 is located on the upper side with respect to the center of the electrode stack 12 in the up-down direction (Z1, Z2).

Returning to FIGS. 2 to 4, the negative electrode sheet 30 has a negative electrode current collector foil 32 and a negative electrode mixture layer 34 provided on the negative electrode current collector foil 32. The negative electrode current collector foil 32 is a metal foil such as a copper foil, for example. The negative electrode current collector foil 32 has a generally rectangular shape when viewed along the first horizontal direction (X1, X2). The negative electrode mixture layer 34 contains a negative electrode active material. Examples of the negative electrode active material include carbon materials such as graphite, hard carbon, and soft carbon, materials that form alloys with lithium such as silicon (Si), and lithium alloys. The negative electrode active material may be composed of a single type of material or a plurality of types of materials. The negative electrode mixture layer 34 may further include other materials such as a binder. In the negative electrode sheet 30 according to the present embodiment, the negative electrode mixture layer 34 is provided on both sides of the negative electrode current collector foil 32. However, in other embodiments, the negative electrode mixture layer 34 may be provided on only one surface of the negative electrode current collector foil 32.

Each of the negative electrode sheets 30 further includes a second joining tab 36. The second joining tab 36 of the negative electrode sheet 30 protrudes toward the other side (Y2) in the second horizontal direction. In the negative electrode sheet 30 according to the present embodiment, the second joining tab 36 is formed integrally with the negative electrode current collector foil 32, although this is not particularly limiting. In the negative electrode sheet 30, the second joining tab 36 is offset toward the upper side (Z1). In other words, a center C36 of the second joining tab 36 is located on the upper side with respect to a center C30 of the negative electrode sheet 30 in the up-down direction (Z1, Z2). In particular, in the negative electrode sheet 30 according to the present embodiment, a lowest part L36 of the second joining tab 36 is located on the upper side with respect to the center C30 of the negative electrode sheet 30. That is, the second joining tab 36 is significantly offset upward such that the entire second joining tab 36 is located on the upper side with respect to the center C30 of the negative electrode sheet 30.

As illustrated in FIG. 6, the second joining tabs 36 of the negative electrode sheets 30 are joined to each other to form a second foil collecting portion 38. That is, the negative electrode sheets 30 are physically and electrically connected at the second foil collecting portion 38. In the second foil collecting portion 38, the second joining tabs 36 are welded to each other by ultrasonic welding, for example, and welding marks 38a are formed, although this is not particularly limiting. Furthermore, the negative electrode terminal 18 is further joined to the second foil collecting portion 38. Consequently, the negative electrode sheets 30 are connected in parallel to the second foil collecting portion 38. Here, in the up-down direction (Z1, Z2), the center of the second foil collecting portion 38 substantially coincides with the center C36 of the second joining tab 36, and the center of the electrode stack 12 substantially coincides with the center C30 of the negative electrode sheet 30. Therefore, the center of the second foil collecting portion 38 is located on the upper side with respect to the center of the electrode stack 12 in the up-down direction (Z1, Z2).

In the battery cell 10 configured as described above, the electrode stack 12 inside the cell case 14 swells and shrinks in response to charging and discharging of the battery cell 10. When the electrode stack 12 swells, the electrolytic solution 19 that has permeated the electrode stack 12 is forced out of the electrode stack 12. A portion of the electrolytic solution 19 forced out of the electrode stack 12 is absorbed by the first foil collecting portion 28 and the second foil collecting portion 38 (hereinafter occasionally collectively referred to as foil collecting portions 28, 38). The foil collecting portions 28, 38 have a structure in which the first joining tabs 26 or the second joining tabs 36 are stacked at high density. Therefore, the electrolytic solution 19 absorbed by the foil collecting portions 28, 38 is likely to remain within the foil collecting portions 28, 38 even when the electrode stack 12 shrinks. When a large amount of the electrolytic solution 19 remains in the foil collecting portions 28, 38, the amount of the electrolytic solution 19 that re-permeates the electrode stack 12 decreases, which may reduce the performance of the battery cell 10, for example.

In this regard, in the battery cell 10 according to the present embodiment, the first joining tab 26 of the positive electrode sheet 20 is offset upward with respect to the center C20 of the positive electrode sheet 20. With such a configuration, the first foil collecting portion 28 at which the first joining tabs 26 are joined to each other is also formed on the relatively upper side. On the other hand, the electrolytic solution 19 forced out of the electrode stack 12 tends to collect in the lower part of the cell case 14 due to the action of gravity. Thus, when the first foil collecting portion 28 is located on the relatively upper side, the electrolytic solution 19 forced out of the electrode stack 12 is less likely to be absorbed by the first foil collecting portion 28, and the electrolytic solution 19 is more likely to be discharged from the first foil collecting portion 28. The same applies to the second foil collecting portion 38. This suppresses the electrolytic solution 19 forced out of the electrode stack 12 remaining in the foil collecting portions 28, 38, and the performance of the battery cell 10 is maintained for a long period of time, for example.

In particular, in the battery cell 10 according to the present embodiment, the lowest part L26 of the first joining tab 26 is located on the upper side with respect to the center C20 of the positive electrode sheet 20. With such a configuration, it is possible to effectively suppress the electrolytic solution 19 forced out of the electrode stack 12 remaining in the first foil collecting portion 28. Similarly, the lowest part L36 of the second joining tab 36 is located on the upper side with respect to the center C30 of the negative electrode sheet 30, which can effectively suppress the electrolytic solution 19 remaining in the second foil collecting portion 38.

As illustrated in FIG. 4, in the battery cell 10 according to the present embodiment, an upper end edge 26a and a lower end edge 26b of the first joining tab 26 are asymmetrical in the up-down direction. In particular, the lower end edge 26b of the first joining tab 26 is displaced toward the lower side toward the base end 26d of the first joining tab 26 (i.e., toward the Y2 direction). That is, the dimension of the first joining tab 26 in the up-down direction increases from the tip end 26c toward the base end 26d. With such a configuration, the electrolytic solution 19 absorbed by the first foil collecting portion 28 is guided toward the electrode stack 12 by the action of gravity. This promotes re-permeation of the electrolytic solution 19 into the electrode stack 12. Similarly, an upper end edge 36a and a lower end edge 36b of the second joining tab 36 are asymmetrical in the up-down direction. In particular, the lower end edge 36b of the second joining tab 36 is displaced toward the lower side toward the base end of the second joining tab 36 (i.e., toward the Y1 direction).

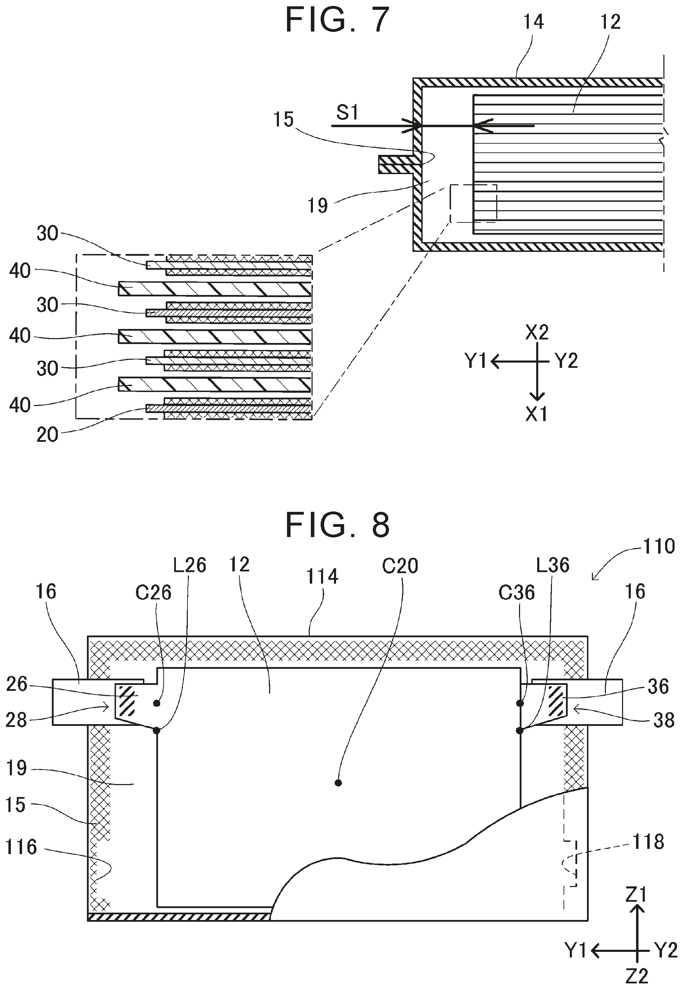

As illustrated in FIGS. 2 and 7, the electrode stack 12 and the inner surface of the cell case 14 face each other in the second horizontal direction (Y1, Y2) on the lower side of the first joining tab 26. In the battery cell 10 according to the present embodiment, a distance S1 between the electrode stack 12 and the inner surface of the cell case 14 that face each other in the second horizontal direction decreases toward the lower side. With such a configuration, when the electrolytic solution 19 forced out of the electrode stack 12 collects in the lower part of the cell case 14, the electrolytic solution 19 is guided toward the electrode stack 12. This promotes re-permeation of the electrolytic solution 19 into the electrode stack 12. Similarly, also on the lower side of the second joining tab 36, a distance S2 between the electrode stack 12 and the inner surface of the cell case 14 that face each other in the second horizontal direction decreases toward the lower side. The distances S1 and S2 between the electrode stack 12 and the inner surface of the cell case 14 may decrease continuously or stepwise toward the lower side.

In relation to the above, in the battery cell 10 according to the present embodiment, the cell case 14 includes the welded portion 15 at which the film material 50 is welded at a position facing the electrode stack 12 in the second horizontal direction. In this case, the distances S1 and S2 between the electrode stack 12 and the inner surface of the cell case 14 are synonymous with the distance between the electrode stack 12 and the welded portion 15 of the cell case 14. Therefore, on the lower side of the first joining tab 26, the distance between the electrode stack 12 and the welded portion 15 of the cell case 14 (i.e., the distance S1) preferably decreases toward the lower side. Similarly, on the lower side of the second joining tab 36, the distance between the electrode stack 12 and the welded portion 15 of the cell case 14 (i.e., the distance S2) preferably decreases toward the lower side.

In addition, as illustrated in FIG. 7, on the lower side of the first joining tab 26 (i.e., on the lower side of the first foil collecting portion 28), the separators 40 protrude further toward one side in the second horizontal direction (i.e., in the Y1 direction) than the positive electrode sheets 20 and the negative electrode sheets 30. With such a configuration, the electrolytic solution 19 forced out of the electrode stack 12 is guided by the separators 40, promoting re-permeation into the electrode stack 12. Although not illustrated in the drawings, also on the lower side of the second joining tab 36 (i.e., on the lower side of the second foil collecting portion 38), the separators 40 protrude further toward the other side in the second horizontal direction (i.e., in the Y2 direction) than the positive electrode sheets 20 and the negative electrode sheets 30.

### Second Embodiment

A battery cell 110 according to a second embodiment will be described with reference to FIG. 8. The battery cell 110 of the second embodiment includes a cell case 114 with a different configuration from the battery cell 10 according to the first embodiment. In the following, differences from the first embodiment will be mainly described, and a description of commonalities with the first embodiment will be omitted. The same components as those of the battery cell 10 according to the first embodiment are denoted by the same reference numerals, and the description made in relation to the first embodiment is applied to all such components.

As illustrated in FIG. 8, in the battery cell 110 according to the present embodiment, a plurality of recesses 116, 118 is provided in the inner surface of the cell case 114. The recesses 116, 118 include a first recess 116 and a second recess 118. The first recess 116 is located on one side (i.e., direction Y1) of the electrode stack 12 in the second horizontal direction. Furthermore, the first recess 116 is located on the lower side with respect to the first foil collecting portion 28 formed by the first joining tabs 26. The second recess 118 is located on the other side (i.e., direction Y2) of the electrode stack 12 in the second horizontal direction. Furthermore, the second recess 118 is located on the lower side with respect to the second foil collecting portion 38 formed by the second joining tabs 36. With such a configuration, the electrolytic solution 19 forced out of the electrode stack 12 is accommodated in the recesses 116, 118, suppressing the electrolytic solution 19 being absorbed by the first foil collecting portion 28 and the second foil collecting portion 38. Consequently, it is possible to effectively suppress the electrolytic solution 19 forced out of the electrode stack 12 remaining in the first foil collecting portion 28 and the second foil collecting portion 38.

The recesses 116, 118 according to the present embodiment are formed in the welded portion 15 of the cell case 114, although this is not particularly limiting. With such a configuration, one or more recesses 116, 118 can be easily formed in the cell case 114. That is, one or more recesses 116, 118 can be formed in any size and shape by changing the range in which the film material 50 is welded. The recesses 116, 118 described in the present embodiment can also be formed in the battery cell 10 according to the first embodiment.

Although the embodiments have been described in detail above, these are merely exemplary and do not limit the scope of the claims. The technology set forth in the claims includes various modifications and alterations of the specific examples indicated above. The technical elements described in the present specification or the drawings exhibit technical utility either alone or in various combinations, and are not limited to the combinations set forth in the claims as originally filed. Furthermore, the technology indicated in the present specification or the drawings can achieve a plurality of objects at the same time, and achieving one of the objects has in itself technical utility.

## Claims

1. A battery cell (10) comprising:
an electrode stack (12) in which a plurality of sheet materials including a plurality of first electrode sheets and a plurality of second electrode sheets is stacked along a first horizontal direction;
a cell case (14) of a pouch shape configured to house the electrode stack (12) and constituted of a film material (50); and
an electrolytic solution (19) enclosed within the cell case (14), wherein:
the first electrode sheets each include a first joining tab (26) and are joined to each other at the first joining tab (26), the first joining tab (26) protruding toward one side (Y1) in a second horizontal direction perpendicular to the first horizontal direction;
the second electrode sheets each include a second joining tab (36) and are joined to each other at the second joining tab (36), the second joining tab (36) protruding toward the other side (Y2) in the second horizontal direction; and
a center (C26) of the first joining tab (26) is located on an upper side (Z1) with respect to a center (C20) of the first electrode sheets in an up-down direction orthogonal to the first horizontal direction and the second horizontal direction.

2. The battery cell (10) according to claim 1, wherein a lowest part (L26) of the first joining tab (26) is located on the upper side (Z1) with respect to the center (C20) of the first electrode sheets.

3. The battery cell (10) according to claim 1, wherein:
an upper end edge (26a) and a lower end edge (26b) of the first joining tab (26) are asymmetrical in the up-down direction; and
the lower end edge (26b) is displaced toward a lower side (Z2) from a tip end (26c) of the first joining tab (26) toward a base end (26d) of the first joining tab (26).

4. The battery cell (10) according to claim 1, wherein on a lower side (Z2) of the first joining tab (26), a distance (S1) between the electrode stack (12) and an inner surface of the cell case (14) that face each other in the second horizontal direction decreases toward the lower side (Z2).

5. The battery cell (10) according to claim 1, wherein:
the cell case (14) includes a welded portion (15) at which the film material (50) is welded at a position facing the electrode stack (12) in the second horizontal direction; and
on a lower side (Z2) of the first joining tab (26), a distance (S1) between the electrode stack (12) and the welded portion (15) of the cell case (14) decreases toward the lower side (Z2).

6. The battery cell (10; 110) according to claim 1, wherein a recess (116) is provided in an inner surface of the cell case (14) in a range located on a lower side (Z2) with respect to the first joining tab (26).

7. The battery cell (10; 110) according to claim 6, wherein:
the cell case (14) includes a welded portion (15) at which the film material (50) is welded; and
the recess (116) is provided in the welded portion (15).

8. The battery cell (10) according to claim 1, wherein:
the sheet materials further include a separator (40); and
the separator (40) protrudes further toward the one side (Y1) in the second horizontal direction than the first electrode sheets and the second electrode sheets on a lower side (Z2) of the first joining tab (26).

9. The battery cell (10) according to claim 1, wherein:
the first electrode sheets are each one of a positive electrode sheet (20) and a negative electrode sheet (30); and
the second electrode sheets are each the other of the positive electrode sheet (20) and the negative electrode sheet (30).

10. The battery cell (10) according to claim 1, wherein a center of the second joining tab (36) is located on an upper side (Z1) with respect to a center (C30) of the second electrode sheets in the up-down direction.
